# EUROPEAN PATENT APPLICATION

(11) **EP 4 167 445 A1**
(43) Date of publication of application: **19.04.2023**
(21) Application number: 21822768.4
(22) Date of filing: 11.06.2021
(51) Int. Cl.: H02K 5/26, H02K 5/24

(54) **ELECTRIC MOTOR SUPPORTING DEVICE AND ELECTRIC MOTOR ASSEMBLY**

(30) Priority: 11.06.2020 CN 202021077519 U
(71) Applicant: Atlas Copco (Wuxi) Compressor Co., Ltd., Wuxi, Jiangsu 214028 (CN)
(72) Inventor: SWERTS, Thomas Luc, Wuxi, Jiangsu 214028 (CN)
(74) Representative: Van Minnebruggen, Ewan Benito Agnes
(86) International application number: PCT/CN2021/099583
(87) International publication number: WO 2021/249524

(57) **Abstract**

The present disclosure discloses a motor support apparatus and a motor assembly. The motor support apparatus includes at least one beam structure formed by bending a metal plate. The metal plate includes a first long side and a second long side that are relative to each other. The bending includes bending the first long side towards the second long side and bending the second long side towards the first long side. The bent first long side is formed as a first free end side of the beam structure. The bent second long side is formed as a second free end side of the beam structure. A spacing is present between the first free end side and the second free end side, in such a manner that a cross section of the beam structure is in an unclosed shape. According to the present disclosure, the bent sides of the beam structure could be adjusted depending on different motor axial heights, which enlarges an adjustable range of the height of the motor support apparatus, satisfying mounting requirements of drive motors of different shaft heights and improving universality of the motor support apparatus. The motor support apparatus is suitable for a plurality of motors with different shaft heights.

## Description

### FIELD

The present disclosure relates to the field of motor technologies, and more specifically, to a motor support apparatus and a motor assembly.

### BACKGROUND

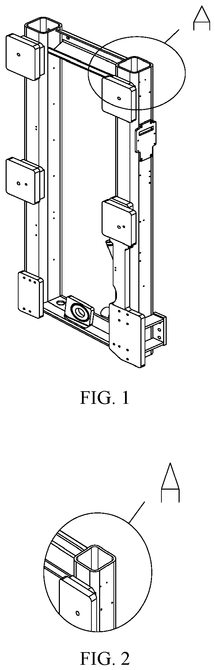

A drive motor used in a multi-stage centrifugal compressor ZH is mounted in a mounting manner B3, i.e., generally horizontally mounted. A compressor element and the drive motor are directly connected through a shaft coupling. The motor is connected to a motor support via four bottom feet. At present, a motor support used on the multi-stage centrifugal compressor ZH is rectangular. As illustrated in FIG. 1 and FIG. 2, a square tube is mainly used for the steel of a motor support, and four bosses are welded on the square tube to be connected to the four bottom feet of the motor. There is only one compressor element size while there are five shaft heights of drive motors under a same frame number of ZH FS2 compressor. Therefore, it is necessary to combine drive motors having different shaft heights with motor supports having different heights for use. The higher a motor shaft height, the smaller a thickness of a boss welded on a matched motor support. A size of a standard square tube in the market is fixed (180* 180mm). Therefore, an adjustable range of a motor bracket's height is limited. For a high-power motor, a shaft thereof is high and large, so a required support height is smaller than a side length of the standard square tube.

Since a motor support structure in the prior art is usually made of a square tube, the adjustable range of the motor bracket's height is limited. The motor support structure may not be suitable for a plurality of motors having different shaft heights, which results in technical problems like poor universality, etc. Therefore, the present disclosure develops and designs a motor support apparatus and a motor assembly.

### SUMMARY

The present disclosure provides a motor support apparatus and a motor assembly, aiming to solve a technical problem that an adjustable range of a motor bracket's height is limited because a motor support structure in the prior art is usually a square tube, and the motor support structure may not be suitable for a plurality of motors with different shaft heights and thus have poor universality.

The motor support apparatus provided by the present disclosure includes at least one beam structure. The beam structure is formed by bending a metal plate. The metal plate includes a first long side and a second long side that are relative to each other. The bending includes bending the first long side towards the second long side and bending the second long side towards the first long side. The bent first long side is formed as a first free end side of the beam structure. The bent second long side is formed as a second free end side of the beam structure. A spacing is present between the first free end side and the second free end side, in such a manner that a cross section of the beam structure is in an unclosed shape.

In some embodiments, the beam structure is in a structural form of a U-shaped beam, with a U-shaped cross section of the beam; and/or a semi-closed internal cavity structure is formed as by bending the beam structure, with a support plate inside.

In some embodiments, a bent structure having a plurality of sections connected to each other, is formed along a length direction of the beam structure thereof; or a curved structure is formed along the length direction of the beam structure thereof.

In some embodiments, the bent structure having the plurality of connected sections includes a first straight section, a second straight section, and a third straight section. The second straight section is connected between the first straight section and the third straight section in such a manner that the first straight section, the second straight section, and the third straight section are sequentially connected. The first straight section and the second straight section form a bend at the junction thereof. The second straight section and the third straight section (1c) form a bend at the junction thereof.

In some embodiments, the beam structure includes a first beam and a second beam. a second straight section of the first beam is connected to a second straight section of the second beam; a first straight section of the first beam extends away with respect to the second beam, and a third straight section of the first beam also extends away with respect to the second beam; and a first straight section of the second beam extends away with respect to the first beam, and a third straight section of the second beam extends away with respect to the first beam.

In some embodiments, the first beam and the second beam have a same structure and a same shape, and they are connected to each other symmetrically; and/or the second straight section of the first beam is permanently connected to the second straight section of the second beam.

In some embodiments, a first reinforcing rib is provided at the junction of the first straight section and the second straight section, a shape of the first reinforcing rib matching a shape of the bend at the junction of the first straight section and the second straight section; and/or a second reinforcing rib is provided at the junction of the second straight section and the third straight section, a shape of the second reinforcing rib matching a shape of the bend at the junction of the second straight section and the third straight section.

In some embodiments, the first reinforcing rib is arranged on a side of the unclosed shape's opening of the beam structure, and has one end permanently connected to the first free end side and the other end permanently connected to the second free end side; and/or the second reinforcing rib is arranged on a side of the unclosed shape's opening of the beam structure, and has one end permanently connected to the first free end side and the other end permanently connected to the second free end side.

The present disclosure further provides a motor assembly, which includes the motor support apparatus according to any one of the preceding embodiments, and a motor. The motor support apparatus is connected to a bottom of the motor.

In some embodiments, the motor assembly further includes a motor base plate and at least one shock pad. The motor base plate is mounted at a bottom of the motor support apparatus. The at least one shock pad is provided between the motor base plate and the motor support apparatus.

The motor support apparatus and the motor assembly provided by the present disclosure have the following beneficial effects.

According to the present disclosure, the motor support apparatus is configured as the at least one beam structure. The beam structure is a structure formed by bending two long sides of a rectangular metal plate towards each other, and the structure formed by the bending is not closed. Therefore, in the beam structure of present disclosure, the bent side could be adjusted depending on different motor axial heights, so that a vertical height of the beam structure could be adjusted according to actual requirements, Therefore, an adjustable range of the motor support apparatus's height is enlarged, better satisfying mounting requirements of different shaft heights of drive motors, and effectively improving universality of the motor support apparatus. The motor support apparatus is suitable for a plurality of motors having different shaft heights.

Compared with the conventional straight beam, the two multi-section bent beam structures, which are arranged as connecting to each other back-to-back and extending oppositely to each other, effectively reduce a quantity of the beam structures in use, effectively reduce the materials, reduce the costs, improve economical efficiency of products, and save space of the whole machine, while satisfying the condition of being permanently connected to the motor at four different positions.

An open U-shaped support of the present disclosure enables easier assembling of bolts which facilitates assembly, disassembly, operation and processing for after-sales service personnel, conveniently for installing and maintaining.

### BRIEF DESCRIPTION OF THE DRAWINGS

In the drawings that are not necessarily drawn to scale, same reference numerals may describe similar components in different views. Same reference numerals having letter suffixes or different letter suffixes may represent different examples of similar components. The drawings illustrate various embodiments generally by way of examples without limitation, and together with the specification and claims, serve to illustrate the disclosed embodiments. When appropriate, the same reference numbers are used throughout the drawings to refer to the same or similar parts. Such embodiments are illustrative and are not intended to be exhaustive or exclusive embodiments of the apparatus or method.
FIG. 1 is a schematic structural diagram of a rectangular support structure (a square tube for instance) in the prior art;
FIG. 2 is a partial enlarged view of part A in FIG. 1;
FIG. 3 is a schematic structural diagram of a motor support structure (a beam structure for instance) in the present disclosure;
FIG. 4 is a partial enlarged view of part B in FIG. 3;
FIG. 5 is a schematic front view of a motor assembly structure in the present disclosure.

The reference numerals in the drawings are denoted as:
100, motor support apparatus; 1, beam structure; 11, first free end side; 12, second free end side; 1a, first straight section; 1b, second straight section; 1c, third straight section; 13, first beam; 14, second beam; 15, internal cavity structure; 2, support plate; 31, first reinforcing rib; 32, second reinforcing rib; 4, motor; 5, motor base plate; 6, shock pad; 7, chassis.

### DETAILED DESCRIPTION

In order to enable those skilled in the art to better understand the technical solutions of the present disclosure, the present disclosure is described in detail below with reference to the drawings and specific implementations. The embodiments of the present disclosure are further described in detail below with reference to the drawings and specific embodiments, but should not be construed as limiting the present disclosure.

The terms "first", "second", and the like used in the present disclosure do not denote any order, quantity, or importance, but are merely used to distinguish different parts. Terms such as "comprise" or "include", etc. mean that an element in front of the term covers an element listed at the back of the term, and does not exclude the possibility that other elements are also covered. The terms "above", "below", "left", "right", and the like are only used to represent a relative positional relationship. When the absolute position of the described object is changed, the relative positional relationship may also be changed accordingly.

In the present disclosure, when it is mentioned that a specific device is between the first device and the second device, an intervening device may exist between the specific device and the first device or the second device, or an intervening device may not exist. When it is mentioned that the specific device is connected to other devices, the specific device may be directly connected to the other devices without the intervening device, or may be indirectly connected to the other devices with an intervening device.

Unless otherwise specifically defined, all terms (including technical terms or scientific terms) used in the present disclosure have the same meaning as commonly understood by those skilled in the art of the present disclosure. It should also be understood that terms defined in a general dictionary should be interpreted as having a meaning that is consistent with their meaning in the context of the related art, and should not be interpreted in an idealized or extremely formalized sense unless expressly so defined herein.

Techniques, methods, and devices known to those skilled in the prior art may not be discussed in detail, but where appropriate, the techniques, methods, and devices should be considered as part of the specification.

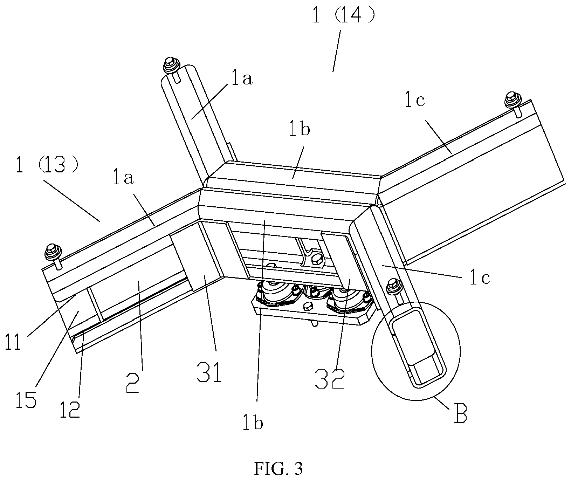

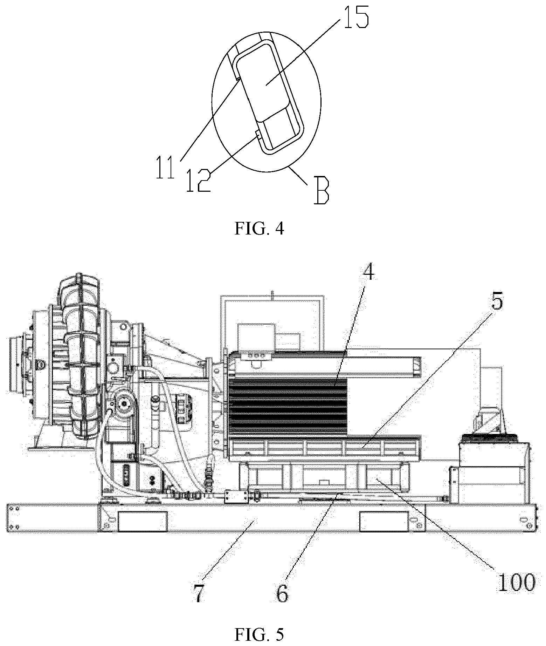

As illustrated in FIG. 3 and FIG. 4, the present disclosure provides a motor support apparatus. The motor support apparatus 100 includes at least one beam structure 1. The beam structure 1 is formed by bending a metal plate. The metal plate includes a first long side and a second long side which are relative to each other. The bending includes bending the first long side towards the second long side and bending the second long side towards the first long side. The bent first long side is formed as a first free end side 11 of the beam structure 1, the bent second long side is formed as a second free end side 12 of the beam structure 1, and a spacing is present between the first free end side 11 and the second free end side 12, in such a manner that a cross section of the beam structure 1 is in an unclosed shape.

According to the present disclosure, the motor support apparatus is configured as the at least one beam structure. The beam structure is a structure formed by bending two long sides of the rectangular metal plate relative to each other, and the structure formed by the bending is unclosed. Therefore, according to the beam structure of present disclosure, a bent edge may be adjusted depending on different motor axial heights. Therefore, a vertical height of the beam structure could be adjusted according to actual requirements, and an adjustable range of the height of the motor support apparatus is expanded, better satisfying mounting requirements of drive motors of different shaft heights, effectively improving universality of the motor support apparatus. The motor support apparatus is suitable for a plurality of motors having different shaft heights.

The beam structure 1 is a U-shaped beam in a structural form, with a U-shaped cross section of the beam; and/or the beam structure 1 is formed as a semi-closed internal cavity structure 15 by bending, a support plate 2 being provided in the internal cavity structure 15. This is a preferred structural form of the beam structure of the present disclosure. By configuring the beam structure as a U-shaped beam having a U-shaped cross section, a magnitude of the vertical height of the beam structure could be further adjusted through a side of the unclosed spacing to satisfy the motors having different shaft heights; and by setting a structural form in which the support plate is disposed in an internal cavity of the beam structure, the support strength of the beam structure could be further improved.

A bent structure having a plurality of sections connected to each other, is formed along a length direction of the beam structure 1 thereof; or a curved structure is formed along the length direction of the beam structure 1 thereof. In the present disclosure, these are two different preferred structural forms of the beam structure in the length direction. A first preferred structure form is the bent structure having the plurality of sections connected to each other. Such a bent structure is beneficial to form a fastening connection of straight sections at two ends to the motor separately, while a middle section is connected to a bottom of the motor support apparatus, such as a base plate or chassis. Therefore, according to a special configuration of the one beam structure, the connections to different components could be realized at different parts of the beam, which reduces materials and provides a more compact structure while achieving a fixing effect. Similarly, for a beam structure of the curved structure, a fastening connection may be formed between an end section of the beam structure and the motor, while a middle section is connected to the bottom of the motor support apparatus, such as the base plate or the chassis. Therefore, according to the special configuration of the one beam structure, the connections to different components could be realized at different parts of the beam, which reduces materials and provides a more compact structure while achieving the fixing effect.

The bent structure 1 having the plurality of sections connected to each other includes a first straight section 1a, a second straight section 1b, and a third straight section 1c. The second straight section 1b is connected between the first straight section 1a and the third straight section 1c, in such a manner that the first straight section 1a, the second straight section 1b, and the third straight section 1c are sequentially connected. The first straight section 1a and the second straight section 1b form a bend at the junction thereof. The second straight section 1b and the third straight section 1c form a bend at the junction thereof. This is a further preferred structural form of the beam structure of the bent structure having the plurality of sections of the present disclosure, i.e., a fastening connection with the motor may be formed through the first straight section and the third straight section, and a fastening connection between the motor support apparatus and the base plate or the chassis is formed through the second straight section.

The beam structures 1 includes a first beam 13 and a second beam 14. A second straight section of the first beam 13 is connected to a second straight section of the second beam 14. A first section of the first beam 13 extends away with respect to the second beam 14, and a third section of the first beam 13 extends away with respect to the second beam 14. A first section of the second beam 14 extends away with respect to the first beam 13, and a third section of the second beam 14 also extends away with respect to the first beam 13. That is, a motor support in an "X" shape is formed. Compared with the conventional straight beam, the two multi-section bent beam structures, which are arranged and connected to each other back-to-back and extends away with respect to each other, effectively reduce a quantity of the beam structures in use, effectively reduce the materials, reduce the costs, improve economical efficiency of products, and save space of the whole machine, while satisfying the condition of being permanently connected to the motor at four different positions.

The X-shaped motor support of the present disclosure is preferentially applied in a single-stage centrifugal blower. There is only one size of the compressor element, while there are five shaft heights of the drive motor used in total. A motor mounting manner is a mounting manner with four bottom feet and a flange. For a motor with a same mounting size, the X-shaped motor support requires fewer materials than the rectangular support, which reduces the costs, improves the economical efficiency of products, and saves the space of the whole machine.

The first beam 13 and the second beam 14 have a same structure and a same shape and they are connected to each other symmetrically; and/or the second straight section of the first beam 13 is permanently connected to the second straight section of the second beam 14. Preferably, screw, welding, or bonding, etc. is used for the connection. It is a further preferred structural form of the first beam and the second beam of the present disclosure, i.e., structures and shapes of the first beam and the second beam are set to be the same, which could provide a uniform support for the motor from four directions to prevent tilting of the motor. The fixed connection of two straight sections of the first beam and the second beam could enable the first beam and the second beam to be fixed into one piece through the middle sections, and the stability of the motor support apparatus is improved. It provides an effective and stable support when it is arranged at a bottom of the motor.

A first reinforcing rib 31 is provided at the junction of the first straight section 1a and the second straight section 1b, and a shape of the first reinforcing rib 31 matches a shape of the bend at the junction of the first straight section 1a and the second straight section 1b; and/or a second reinforcing rib 32 is provided at a junction of the second straight section 1b and the third straight section 1c, and a shape of the second reinforcing rib 32 matches a shape of the bend at the junction of the second straight section 1b and the third straight section 1c. By providing the first reinforcing rib, a reinforcing and strengthening effect could be achieved at the junction of the first straight section and the second straight section, which could further effectively improve the structural strength of the motor support apparatus. By providing the second reinforcing rib, a reinforcing and strengthening effect could be achieved at the junction of the second straight section and the third straight section, which could further effectively improve the structural strength of the motor support apparatus.

The first reinforcing rib 31 is arranged on a side of an opening of the unclosed shape of the beam structure 1, and has one end permanently connected to the first free end side 11 and another end permanently connected to the second free end side 12; and/or the second reinforcing rib 32 is arranged on a side of the opening of the unclosed shape of the beam structure 1, and has one end permanently connected to the first free end side 11 and another end permanently connected to the second free end side 12. Since the beam structure defines the opening of the unclosed shape on one side, a structural strength at that position may have a serious risk, and phenomena such as deformation or damage, etc. may occur under a pressure. Therefore, with the first reinforcing rib arranged at the opening position, connecting and fastening the upper and lower end sides, the structural strength of the opening and the bending part could be effectively enhanced. With the second reinforcing rib arranged at the opening position, connecting and fastening the upper and lower end sides, the structural strength of the opening and the bending part could also be effectively enhanced.

As illustrated in FIG. 5, the present disclosure further provides a motor assembly, which includes the motor support apparatus 100 according to any one of the above embodiments, and further includes a motor 4. The motor support apparatus 100 is connected to a bottom of the motor 4.

The X-shaped motor support of the present disclosure is preferentially applied in the single-stage centrifugal blower. There is only one size of the compressor element of the product, and there are five shaft heights of the drive motor used in total. The motor mounting manner is a mounting manner with four bottom feet and a flange. A bracket of the X-shaped motor support of the present disclosure is composed of two main U-shaped beams. Each U-shaped beam is manufactured by performing a simple bending operation on a metal plate. Some reinforcing ribs/support plates are welded on the U-shaped beam to ensure strength and rigidity of the support structure for motor. Since an adjustable range of the U-shaped beam's height is wide, the mounting requirements of the drive motors having different shaft heights could be more easily satisfied. For the motor with the same mounting size, the X-shaped motor support requires fewer materials than the rectangular support, which reduces the costs, improves the economical efficiency of products, and saves the space of the whole machine.

In the X-shaped motor support of the present disclosure, the bracket is composed of two main U-shaped beams. Each U-shaped beam is manufactured by performing a simple bending operation on a metal plate. In addition, some reinforcing ribs/support plates are welded on the U-shaped beam to ensure the strength and rigidity of the support structure for motor.

Advantages of the present disclosure as followings:
1) Due to the manufacturing process of the U-shaped beam, an adjustable range of the X-shaped support's height is large, which could better satisfy the mounting requirements of the drive motors having different shaft heights. 2) For the motor with the same mounting size, the X-shaped motor support requires fewer materials than the rectangular support, which improves the economy of products, and saves the space of the whole machine. 3) Convenience of maintenance and mounting: an open U-shaped support enables easier assembling of bolts, so that it facilitates assembly, disassembly, operation and processing of after-sales service personnel.

Further, a motor base plate 5 and a shock pad 6 are further included. The motor base plate 5 is mounted at a bottom of the motor support apparatus 100. At least one shock pad 6 is provided between the motor base plate 5 and the motor support apparatus 100. The shock pad could provide a shock absorption for the motor.

In addition, although exemplary embodiments have been described herein, the scope thereof includes any and all embodiments with equivalent elements, modifications, omissions, combinations (for example, schemes that cross various embodiments), adaptations or changes based on the present disclosure. The elements in the claims are to be explained broadly in the language employed in the claims, and are not limited to the examples described in the specification or during implementation of the present disclosure, examples of which are to be explained as non-exclusive. Therefore, the specification and examples are intended to be considered as examples only. The true scope and idea are indicated by the full scope of the following claims and their equivalents.

The above description is intended to be illustrative but not restrictive. For example, the above-described examples (or one or more schemes thereof) may be used in combination with each other. Other embodiments may be used by those skilled in the art upon reading the foregoing description. In addition, in the foregoing specific implementations, various features may be grouped together to simplify the present disclosure. This should not be explained as an intention that a disclosed feature that is not claimed is necessary for any of the claims. On the contrary, the subject matter of the present disclosure may be defined by fewer features than all the features of a specific disclosed embodiment. Thus, the following claims are incorporated herein into the specific implementations as examples or embodiments, in which each claim is independently as a separate embodiment. It is contemplated that these embodiments may be combined with each other in various combinations or permutations. The scope of the present disclosure should be determined with reference to the full scope of the appended claims and equivalents to which such claims are entitled.

The above embodiments are merely exemplary embodiments of the present disclosure, and are not intended to limit the present disclosure. The protection scope of the present disclosure is defined by the claims. Various modifications or equivalent substitutions may be made to the present disclosure by those skilled in the art within the essence and protection scope of the present disclosure, and such modifications or equivalent substitutions should also be regarded as falling within the protection scope of the present disclosure.

## Claims

1. A motor support apparatus, wherein:
comprising at least one beam structure (1), formed by bending a metal plate,
the metal plate includes a first long side and a second long side that are relative to each other;
the bending comprises bending the first long side towards the second long side and bending the second long side towards the first long side;
the bent first long side is formed as a first free end side (11) of the beam structure (1) after bending;
the bent second long side is formed as a second free end side (12) of the beam structure (1) after bending; and
a spacing is present between the first free end side (11) and the second free end side (12), in such a manner that a cross section of the beam structure (1) is in an unclosed shape.

2. The motor support apparatus according to claim 1, wherein the beam structure (1) is a U-shaped beam, with a U-shaped cross section; and/or a semi-closed internal cavity structure (15) is formed through bending the beam structure (1), with a support plate (2) in the internal cavity structure (15).

3. The motor support apparatus according to claim 1, wherein a bent structure having a plurality of sections connected to each other is formed along a length direction of the beam structure (1) thereof; or a curved structure is formed along a length direction of the beam structure (1) thereof.

4. The motor support apparatus according to claim 3, wherein the bent structure having the plurality of sections connected to each other comprises a first straight section (1a), a second straight section (1b), and a third straight section (1c), wherein:
the second straight section (1b) is connected between the first straight section (1a) and the third straight section (1c) in such a manner that the first straight section (1a), the second straight section (1b), and the third straight section (1c) are sequentially connected;
the first straight section (1a) and the second straight section (1b) form a bend at the junction thereof; and
the second straight section (1b) and the third straight section (1c) form a bend at the junction thereof.

5. The motor support apparatus according to claim 4, wherein the at least one beam structure (1) comprises a first beam (13) and a second beam (14), wherein:
a second straight section of the first beam (13) is connected to a second straight section of the second beam (14);
a first straight section of the first beam (13) extends away with respect to the second beam (14), and a third straight section of the first beam (13) extends away with respect to the second beam (14); and
a first straight section of the second beam (14) extends away with respect to the first beam (13), and a third straight section of the second beam (14) extends away with respect to the first beam (13).

6. The motor support apparatus according to claim 5, wherein the first beam (13) and the second beam (14) have a same structure and a same shape, and are connected to each other symmetrically; and/or the second straight section of the first beam (13) is permanently connected to the second straight section of the second beam (14).

7. The motor support apparatus according to claim 4, wherein:
a first reinforcing rib (31) is provided at the junction of the first straight section (1a) and the second straight section (1b), a shape of the first reinforcing rib (31) matching a shape of the bend at the junction of the first straight section (1a) and the second straight section (1b); and/or
a second reinforcing rib (32) is provided at the junction of the second straight section (1b) and the third straight section (1c), a shape of the second reinforcing rib (32) matching a shape of the bend at the junction of the second straight section (1b) and the third straight section (1c).

8. The motor support apparatus according to claim 7, wherein the first reinforcing rib (31) is arranged on a side of an opening of the unclosed shape of the beam structure (1), and has one end permanently connected to the first free end side (11) and the other end permanently connected to the second free end side (12); and/or
the second reinforcing rib (32) is arranged on a side of the opening of the unclosed shape of the beam structure (1), and has one end permanently connected to the first free end side (11) and the other end permanently connected to the second free end side (12).

9. A motor assembly, comprising:
the motor support apparatus (100) according to any one of claims 1 to 8; and
a motor (4), wherein the motor support apparatus (100) is connected to a bottom of the motor (4).

10. The motor assembly according to claim 9, further comprising:
a motor base plate (5), mounted at a bottom of the motor support apparatus (100); and
at least one shock pad (6), provided between the motor base plate (5) and the motor support apparatus (100).

## Amended claims

### Amended claims under Art. 19.1 PCT

1. A motor support apparatus, wherein:
comprising at least one beam structure (1), formed by bending a metal plate,
the metal plate includes a first long side and a second long side that are relative to each other;
the bending comprises bending the first long side towards the second long side and bending the second long side towards the first long side;
the bent first long side is formed as a first free end side (11) of the beam structure (1) after bending;
the bent second long side is formed as a second free end side (12) of the beam structure (1) after bending; and
a spacing is present between the first free end side (11) and the second free end side (12), in such a manner that a cross section of the beam structure (1) is in an unclosed shape, wherein a bent structure having a plurality of sections connected to each other is formed along a length direction of the beam structure (1) thereof; or a curved structure is formed along a length direction of the beam structure (1) thereof.

2. The motor support apparatus according to claim 1, wherein the beam structure (1) is a U-shaped beam, with a U-shaped cross section; and/or a semi-closed internal cavity structure (15) is formed through bending the beam structure (1), with a support plate (2) in the internal cavity structure (15).

3. The motor support apparatus according to claim 1, wherein the bent structure having the plurality of sections connected to each other comprises a first straight section (1a), a second straight section (1b), and a third straight section (1c), wherein:
the second straight section (1b) is connected between the first straight section (1a) and the third straight section (1c) in such a manner that the first straight section (1a), the second straight section (1b), and the third straight section (1c) are sequentially connected;
the first straight section (1a) and the second straight section (1b) form a bend at the junction thereof; and
the second straight section (1b) and the third straight section (1c) form a bend at the junction thereof.

4. The motor support apparatus according to claim 3, wherein the at least one beam structure (1) comprises a first beam (13) and a second beam (14), wherein:
a second straight section of the first beam (13) is connected to a second straight section of the second beam (14);
a first straight section of the first beam (13) extends away with respect to the second beam (14), and a third straight section of the first beam (13) extends away with respect to the second beam (14); and
a first straight section of the second beam (14) extends away with respect to the first beam (13), and a third straight section of the second beam (14) extends away with respect to the first beam (13).

5. The motor support apparatus according to claim 4, wherein the first beam (13) and the second beam (14) have a same structure and a same shape, and are connected to each other symmetrically; and/or the second straight section of the first beam (13) is permanently connected to the second straight section of the second beam (14).

6. The motor support apparatus according to claim 3, wherein:
a first reinforcing rib (31) is provided at the junction of the first straight section (1a) and the second straight section (1b), a shape of the first reinforcing rib (31) matching a shape of the bend at the junction of the first straight section (1a) and the second straight section (1b); and/or
a second reinforcing rib (32) is provided at the junction of the second straight section (1b) and the third straight section (1c), a shape of the second reinforcing rib (32) matching a shape of the bend at the junction of the second straight section (1b) and the third straight section (1c).

7. The motor support apparatus according to claim 6, wherein the first reinforcing rib (31) is arranged on a side of an opening of the unclosed shape of the beam structure (1), and has one end permanently connected to the first free end side (11) and the other end permanently connected to the second free end side (12); and/or
the second reinforcing rib (32) is arranged on a side of the opening of the unclosed shape of the beam structure (1), and has one end permanently connected to the first free end side (11) and the other end permanently connected to the second free end side (12).

8. A motor assembly, comprising:
the motor support apparatus (100) according to any one of claims 1 to 7; and
a motor (4), wherein the motor support apparatus (100) is connected to a bottom of the motor (4).

9. The motor assembly according to claim 8, further comprising:
a motor base plate (5), mounted at a bottom of the motor support apparatus (100); and
at least one shock pad (6), provided between the motor base plate (5) and the motor support apparatus (100).
